Europäisches Patentamt

European Patent Office

Office européen des brevets

(19)

(11) Veröffentlichungsnummer: **0 167 113**
A2

(12) # EUROPÄISCHE PATENTANMELDUNG

(21) Anmeldenummer: 85107973.1

(22) Anmeldetag: 27.06.85

(51) Int. Cl.⁴: **C 08 K 5/09**
C 08 L 23/02

(30) Priorität: 05.07.84 DE 3424695

(43) Veröffentlichungstag der Anmeldung:
08.01.86 Patentblatt 86/2

(84) Benannte Vertragsstaaten:
BE DE FR GB IT NL

(71) Anmelder: HOECHST AKTIENGESELLSCHAFT
Postfach 80 03 20
D-6230 Frankfurt am Main 80(DE)

(72) Erfinder: Bonnke, Martin, Dr.
Im Lerchenfeld 47
D-6234 Hattersheim am Main(DE)

(72) Erfinder: Bothe, Lothar, Dr.
Am Heiligenhaus 9
D-6500 Mainz(DE)

(54) Polyolefin-Formmasse.

(57) Eine Polyolefin-Formmasse, welche eine sehr geringe Menge eines Metallsalzes der Zitronensäure enthält, bewirkt eine nur sehr geringe Korrosion an den Maschinen während der Verarbeitung.

EP 0 167 113 A2

HOECHST AKTIENGESELLSCHAFT   HOE 84/F 151   Dr.DA/cr

## Polyolefin-Formmasse

Die Erfindung betrifft eine Polyolefin-Formmasse, welche bei der Verarbeitung weniger Korrosion an den Maschinen bewirkt.

Bei der Verarbeitung von Polyolefin-Formmassen zu Formteilen tritt häufig Korrosion an den Metallteilen auf, die mit der heißen Formmasse in Berührung kommen. Es hat daher nicht an Versuchen gefehlt, diesen Mangel zu beseitigen.

Es ist bekannt, derartigen Formmassen Metallstearate, wie beispielsweise Calciumstearat, oder Magnesiumoxid zur Verminderung der Korrosion an den Verarbeitungsmaschinen zuzusetzen. Allerdings beeinträchtigt Magnesiumoxid die Farbqualität der Formteile und beim Einsatz von Calciumstearat kommt es zu unerwünschten Ablagerungen an den Maschinenteilen und/oder Auftreten von Dämpfen.

Es ist weiterhin bekannt, Salze der Zitronensäure als Nukleierungsmittel in leicht kristallisierenden Polyolefin-Formmassen zu verwenden (vgl. Deutsche Offenlegungsschrift 32 06 137). Die Menge des Salzes beträgt 0,05 bis 0,8 Gewichtsprozent, bezogen auf das Polyolefin.

Es wurde nun gefunden, daß eine Polyolefin-Formmasse, welche eine sehr geringe Menge eines Metallsalzes der Zitronensäure enthält, weniger Korrosion an den Maschinen bewirkt.

Gegenstand der Erfindung ist somit eine Polyolefin-Formmasse, bestehend aus einem Homo- oder Copolymerisat eines 1-Olefins mit 2 bis 10 Kohlenstoffatomen, 0,01 bis 0,045 Gew.-%, bezogen auf das Polymerisat, eines Metallsalzes der Zitronensäure, sowie gegebenenfalls üblichen anderen Hilfs- bzw. Zusatzstoffen in üblichen Mengen.

Für die erfindungsgemäße Polyolefin-Formmasse eignen sich als Basispolymere Homo- oder Copolymerisate von 1-Olefinen mit 2 bis 10 Kohlenstoffatomen, beispielsweise von Ethylen, Propylen, Buten-1, 4-Methylpenten-1. Infrage kommen somit Polyethylen, Polypropylen, Polybuten-1, Poly-(4-methyl)-penten-1, Ethylen-Propylen-Copolymerisate, Ethylen-Buten-Copolymerisate, udgl. sowie Gemische dieser Polymerisate.

Das Metallsalz der Zitronensäure ist ein Salz der Alkalimetalle, der Erdalkalimetalle oder der Erdmetalle, beispielsweise Natrium, Kalium, Lithium, Calcium, Magnesium, Aluminium. Vorzugsweise werden Salze der Alkali- und Erdalkalimetalle eingesetzt, insbesondere die Citrate von Kalium und Natrium. Die Menge beträgt 0,01 bis 0,045 Gew.-%, jeweils bezogen auf das Polyolefin.

Die Citrate werden vorteilhaft in feinteiliger Form eingesetzt. Ihre Korngröße ist vorzugsweise kleiner 30 µm.

Die erfindungsgemäße Formmasse kann die üblichen, die Verarbeitung erleichternden und die physikalischen Eigenschaften verbessernden Zusatzstoffe enthalten. Als solche sind zu nennen Licht- und Wärmestabilisatoren, Antioxidantien, Antistatika, Gleitmittel, sowie Füllstoffe, Farbpigmente und Flammschutzmittel. Die erste Gruppe ist in der Formmasse im allgemeinen in einer Menge von 0,01 bis 5 Gewichtsprozent, berechnet auf die Menge Polymer (plus Füllstoff) enthalten. Füllstoffe, Farbpigmente und Flammenschutzmittel werden in einer Menge entsprechend den Bedürfnissen eingesetzt.

Das Einarbeiten des Metallsalzes der Zitronensäure in das Polyolefin geschieht auf bekannte Weise, beispielsweise mittels Mischer, Extruder, Walzwerke, Kneter. Gegebenenfalls kann das Einmischen auch durch Aufsprühen einer Lösung erfolgen.

Beispiel 1

Je ein Propylen-Homopolymerisat (R-1; MFI 5/230 = 10 g/10 min) und ein Propylen-Ethylen-Blockcopolymerisat (R-2; 8 % Ethylen, MFI 5/230 = 1 g/10 min) wurden mit steigenden Mengen Trikaliumcitrat vermischt und einem Korrosionstest unterzogen. Zum Vergleich wurden Formmassen mit jeweils der gleichen Menge Calciumstearat hergestellt.

Dazu wurden 2 Eisenplättchen von 0,2 mm Stärke in die Formmassen-Proben so eingelegt, daß sie möglichst gleichmäßig vom Pulver oder Granulat umgeben waren. Dazu wurde in die Aussparungen (ø 50 mm) eines 4 mm-Abstandsrahmens etwa die Hälfte der abgewogenen Materialmenge (6 g) eingefüllt und die Plättchen mit der Pinzette so nebeneinandergelegt, daß sie sich weder gegenseitig noch den Rahmen berührten. Die Eisenplättchen waren ca. 20 mm lang und wurden in Aceton aufbewahrt, nachdem sie durch Abreiben mit Aceton entfettet wurden. Vor dem Einlegen waren sie mit einem weichen Läppchen vom Aceton zu befreien. Die Eisenplättchen dürfen nicht mit den Fingern berührt werden.

Abstandsrahmen und Abdeckbleche (Aluminiumfolie) wurden in die auf 250°C aufgeheizte Presse gelegt und nach 5 min Kontaktdruck 1 h unter einem Druck von 100 atü verpreßt. Vorher wurde die 0,5 mm starke Aluminiumfolie, die zwischen Deckplatte und Abstandsrahmen eingefügt war, mit Vaseline eingerieben, um das Festkleben des Produktes an die Aluminiumfolie herabzusetzen.

Danach wurde die Presse sofort abgekühlt. Die Eisenplättchen müssen noch nebeneinanderliegen und dürfen nicht aus der Platte herausragen. Sie wurden aus der Platte herausgestanzt, gelocht und auf 1/10 mg genau gewogen. Selbstverständlich durften sie nicht mit der Hand berührt werden. Danach hängte man sie aufgereiht auf einen Kupferdraht in den Dampfstrom siedenen Wassers. Oberhalb der Wasseroberfläche befand sich ein Sieb, um zu verhindern, daß sich Wassertröpfchen an den Blechen absetzten. Nach 1 h wurden die Eisenplättchen entnommen, bei Raumtemperatur 1 h gelagert, und dann erneut gewogen. Die Gewichtszunahme in % ergibt den Korrosionswert, der in Tabelle 1 aufgelistet ist.

Tabelle 1: Ergebnisse der Korrosionstests

| Rohstoff<br>+ Trikaliumcitrat<br>bzw. Calciumstearat | Korrosionswert in % | |
|---|---|---|
| | Trikaliumcitrat | Calciumstearat |
| R-1 | 0,22 | 0,22 |
| R-1 + 0,01 % | 0,02 | 0,19 |
| R-1 + 0,03 % | 0,02 | 0,11 |
| R-1 + 0,05 % | 0,02 | 0,07 |
| R-1 + 0,3 % | 0,02 | 0,04 |
| R-1 + 0,5 % | 0,02 | 0,03 |
| R-2 | 0,54 | 0,54 |
| R-2 + 0,01 % | 0,05 | 0,52 |
| R-2 + 0,03 % | 0,02 | 0,45 |
| R-2 + 0,05 % | 0,02 | 0,40 |
| R-2 + 0,3 % | 0,02 | 0,11 |
| R-2 + 0,5 % | 0,02 | 0,10 |

## Beispiel 2

An den Formmassen gemäß Beispiel 1 wurde die nukleierende Wirkung von Trikaliumcitrat mittels Differentialthermoanalyse (DTA) untersucht. Die Ergebnisse sind in der Tabelle 2 zusammengefaßt.

Tabelle 2: DTA-Messungen

| Rohstoff + Trikaliumcitrat bzw. Calciumstearat | Rekristallisationstemperatur in °C | |
|---|---|---|
| | Trikaliumcitrat | Calciumstearat |
| R-1 | 129 | 129 |
| R-1 + 0,01 % | 130 | 131 |
| R-1 + 0,03 % | 130 | 131 |
| R-1 + 0,05 % | 129 | 131 |
| R-1 + 0,3 % | 132 | 133 |
| R-1 + 0,5 % | 133 | 130 |
| R-2 | 128 | 128 |
| R-2 + 0,01 % | 129 | 127 |
| R-2 + 0,03 % | 128 | 125 |
| R-2 + 0,05 % | 128 | 127 |
| R-2 + 0,3 % | 128 | 128 |
| R-2 + 0,5 % | 127 | 130 |

Wie aus der Tabelle hervorgeht, zeigt das Trikaliumcitrat im erfindungsgemäßen Konzentrationsbereich keine nukleierende Wirkung auf die Polyolefine.

PATENTANSPRÜCHE:

1. Polyolefin-Formmasse, bestehend aus einem Homo- oder Copolymerisat eines 1-Olefins mit 2 bis 10 Kohlenstoffatomen, 0,01 bis 0,45 Gew.-%, bezogen auf das Polymerisat, eines Metallsalzes der Zitronensäure, sowie gegebenenfalls üblichen anderen Hilfs- bzw. Zusatzstoffen in üblichen Mengen.

2. Polyolefin-Formmasse nach Anspruch 1, dadurch gekennzeichnet, daß das Metallsalz der Zitronensäure ein Kalium- oder Natriumsalz ist.

3. Polyolefin-Formmasse nach Anspruch 1, dadurch gekennzeichnet, daß das Metallsalz der Zitronensäure eine Korngröße kleiner 30 µm besitzt.

4. Verfahren zur Verminderung der Korrosion an den Maschinen bei der Verarbeitung von Homo- oder Copolymerisaten eines 1-Olefins mit 2 bis 10 Kohlenstoffatomen, dadurch gekennzeichnet, daß man den Polymerisaten 0,01 bis 0,045 Gew.-%, bezogen auf das Polyolefin, eines Metallsalzes der Zitronensäure beimischt.